# FASCICULE DE BREVET EUROPEEN

(11) **EP 1 478 871 B1**
(45) Date de publication et mention de la délivrance du brevet: **14.09.2005**
(21) Numéro de dépôt: 03720610.9
(22) Date de dépôt: 10.02.2003
(51) Int. Cl.: F16L 33/01

(54) **EMBOUT INSTRUMENTE DE CONDUITE FLEXIBLE ADAPTE A LA DETECTION DU DEPLACEMENT D' UNE COUCHE DE CONDUITE, ET CONDUITE ASSOCIEE**
SCHLAUCHSTUECK MIT GERAET ZUM ERFASSEN DER BEWEGUNG EINER ROHRLEITUNGSSCHICHT,UND ZUGEHOERIGE ROHRLEITUNG
END PIECE COMPRISING A FLEXIBLE PIPE, WHICH IS DESIGNED TO DETECT THE MOVEMENT OF A PIPE LAYER, AND THE ASSOCIATED PIPE

(30) Priorité: 20.02.2002 FR 0202155
(43) Date de publication de la demande: 24.11.2004
(73) Titulaire: Technip France, 92400 Courbevoie (FR)
(72) Inventeur: LEMBEYE, Philippe, F-76380 Montigny (FR)
(74) Mandataire: Bertrand, Didier
(86) Numéro de dépôt international: PCT/FR2003/000414
(87) Numéro de publication internationale: WO 2003/071179

(56) Documents cités:
- FR-A- 2 790 087
- GB-A- 2 138 917

## Description

La présente invention concerne un embout pour conduite flexible pour véhiculer sur de grandes distances un fluide sous pression et le cas échéant sous haute température, tel qu'un gaz, du pétrole, de l'eau ou d'autres fluides. L'invention vise plus précisément un embout pour une conduite flexible destinée à une exploitation pétrolière en mer.

Les conduites flexibles utilisées en mer doivent pouvoir résister à des pressions internes et/ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les recommandations API 17 B et API 17 J établies par l'American Petroleum Institute sous l'intitulé "Recommended Practice for Flexible Pipe" and "Specification for Unbonded Flexible Pipe".

Une conduite flexible comprend généralement de l'intérieur vers l'extérieur :
- une gaine d'étanchéité interne ou gaine de pression, réalisée en matière plastique généralement polymère, résistant à l'action chimique du fluide à transporter ;
- éventuellement une voûte de pression résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I ;
- au moins une nappe (et généralement au moins deux nappes croisées) d'armures de traction enroulées à pas long ; l'angle d'armage mesuré sur l'axe longitudinal de la conduite est par exemple sensiblement égal à 55°; et
- une gaine de protection et d'étanchéité externe en polymère.

Une telle conduite peut être à passage interne lisse quand le passage est directement formé par la gaine d'étanchéité (elle est alors dite "smooth bore") ou à passage non-lisse ("rough bore") quand on prévoit en outre à l'intérieur de la gaine d'étanchéité interne une carcasse constituée d'un feuillard agrafé qui sert à empêcher l'écrasement de la conduite sous la pression externe.

Les embouts des conduites, destinés à leurs connexions entre elles ou avec des équipements terminaux, sont également définis dans les recommandations API 17J, et doivent être réalisés dans des conditions assurant à la fois une bonne solidarisation et une bonne étanchéité. Celles-ci sont généralement obtenues par un sertissage de la gaine, c'est-à-dire par une pénétration radiale partielle d'un élément rigide dans la gaine.

On connaît plusieurs types d'embouts pour les conduites flexibles utilisant le principe du sertissage de la gaine interne, notamment par les documents FR 2 214 852 ou WO 99/19655 ou encore par le document WO97/25564 au nom de la Demanderesse et le document PCT/FR01/03305 également au nom de la Demanderesse. Ce dernier document décrit notamment un embout de fixation pour une conduite tubulaire flexible comprenant une première partie annulaire (généralement appelée voûte de l'embout) sur laquelle peut prendre appui une première bride de sertissage munie d'un cône de sertissage de la gaine intérieure et une seconde partie annulaire (généralement appelée capot) entourant et prolongeant vers l'arrière la première partie annulaire et sur laquelle peut prendre appui une seconde bride de sertissage munie d'un cône de sertissage de la gaine externe coopérant avec une canule arrière d'appui de sertissage, la seconde partie annulaire définissant avec la première partie annulaire un espace annulaire dans lequel sont disposées les armures de manière à ce qu'elles soient décollées radialement de la gaine interne afin de passer autour de la première bride de sertissage et de la première partie annulaire pour y être fixées ; l'embout comporte un collier de blocage des armures entre la première bride de sertissage et la seconde bride de sertissage ; l'espace annulaire précité est destiné à être rempli d'une matière de remplissage telle qu'une résine qui vient bloquer les divers éléments compris dans cet espace.

La gaine intérieure, ou gaine de pression, est réalisée en matière plastique, par exemple en "Coflon"® ; avec le temps, en fonction des contraintes de pression et de température qui s'exercent sur elle, la gaine peut subir une certaine déplastification, qui peut conduire à un sertissage défectueux dans l'embout. La gaine peut alors se déplacer, ce qui entraîne des risques de fuites au niveau de l'embout. Il importe donc de surveiller la position de la gaine par une inspection régulière.

On connaît des procédés d'inspection de l'intérieur d'une conduite, à l'aide de "souris" d'inspection parcourant la conduite et donnant par exemple des images vidéo ou bien repérant un éventuel recul de la carcasse par un système de courants de Foucault et de capteurs associés (cf. le document FR 2790087 au nom de la Demanderesse). De tels procédés, outre qu'ils renseignent sur la carcasse mais non directement sur la gaine (dans le cas des conduites "rough bore"), ont l'inconvénient d'exiger l'arrêt provisoire de l'exploitation pour envoyer la souris dans la conduite.

Pour pouvoir effectivement accéder à une information de déplacement concernant la gaine, il a été proposé dans le document WO 98/12545 de pourvoir l'élément à contrôler de marqueurs dont le déplacement peut être détecté par rayons X, à l'aide d'un détecteur de rayons X ou d'une pellicule photographique sensible aux rayons X. Dans tous les cas, cela nécessite un équipement lourd et également l'arrêt de la production pour pouvoir disposer le détecteur en place autour de la conduite.

Le but de l'invention est donc de proposer un procédé de détection et un embout associé qui ne présentent pas les inconvénients précités et puissent fournir une.indication sur le déplacement de la gaine de pression ou d'autres couches de la conduite sans nécessiter l'arrêt de la production.

L'invention atteint son but grâce à un embout suivant la revendication 1.

Avantageusement, la couche à surveiller est elle-même équipée d'au moins un marqueur spécifique auquel est sensible le capteur de détection.

Le capteur communique à un dispositif de traitement de signal le signal de détection par tout moyen de transmission, filaire ou non.

L'invention concerne donc un embout de fixation pour une conduite tubulaire flexible comprenant au moins, de l'intérieur vers l'extérieur plusieurs couches coaxiales et notamment une gaine de pression réalisée en matière plastique et au moins une nappe d'armures de traction, l'embout comportant une voûte annulaire sur laquelle peut prendre appui une bride de sertissage de la gaine de pression, caractérisé en ce que l'embout comporte également au moins un capteur intégré de déplacement d'une des couches de la conduite.

Dans une application préférée de l'invention, le capteur est un capteur du déplacement de la gaine de pression. Cependant, la couche inspectée peut très bien être la carcasse, en utilisant un marqueur et un capteur adéquats. On pourrait ainsi mesurer le déplacement d'une bague d'arrêt (en anglais "stop ring") disposé à l'extrémité de la carcasse et dont la position est susceptible d'être repérée par le type de capteur utilisé.

Avantageusement, le capteur est un capteur de champ magnétique coopérant avec au moins un aimant disposé dans la gaine de pression.

Avantageusement, plusieurs aimants sont disposés dans la gaine dans un plan transversal à l'axe longitudinal de la conduite.

Le capteur magnétique est choisi parmi les capteurs à effet Hall, à magnétodiode, à magnétorésistance ou à fibres optiques (réseau de Bragg couplé à un tube magnétostrictif), les capteurs fibre optique à effet Faraday.

Il est possible d'avoir un seul capteur pour déterminer le glissement de la gaine. On peut aussi en prévoir plusieurs, dont le nombre et la position longitudinale dans l'embout dépendent notamment de la fmesse de la mesure que l'on veut effectuer ainsi que de la longueur potentielle du déplacement de gaine que l'on souhaite mesurer.

De préférence, le ou les capteurs sont logés dans la voûte annulaire de l'embout.

Le ou les capteurs peuvent être reliés de manière filaire ou non à un boîtier collecteur de données situé par exemple sur l'embout. Les données peuvent ensuite être remontées par un équipement sous-marin venant collecter les données des différents embouts de manière périodique. Selon une autre variante, les données peuvent être remontées de manière filaire par des fibres optiques disposées à l'intérieur d'une des différentes couches de la conduite flexible par exemple. De cette façon, elles peuvent être traitées de manière quasi-permanente, permettant ainsi de vérifier en continue le comportement de la couche qui est surveillée.

Le logement du capteur est relié à l'extérieur de l'embout par des passages (perçages, gorges) pour les connexions, notamment filaires.

Avantageusement, le logement du capteur comporte une protection thermique.

L'invention concerne également une conduite flexible comportant un embout muni d'au moins un capteur et comportant dans une de ses couches constitutives dont on veut détecter le déplacement au moins un marqueur associé au capteur.

Avantageusement, la conduite flexible comporte dans une de ses couches, comme par exemple la nappe d'àrmures de traction, des moyens de transmission (câbles, fils, fibres optiques) destinés à transmettre les informations fournies par le capteur de l'embout.

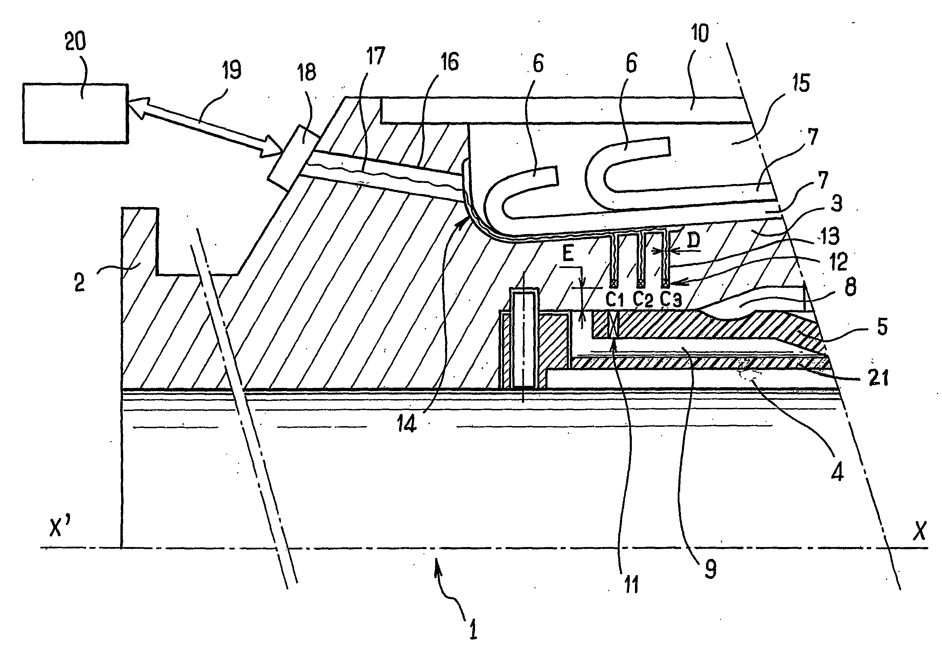

D'autres avantages et caractéristiques seront mis en évidence à la lecture de la description qui suit, en référence à la figure unique représentant en demi-coupe longitudinale partielle un embout terminal de conduite, instrumenté conformément à l'invention.

L'embout 1, symétrique autour de son axe longitudinal XX' coïncidant avec l'axe central de la conduite, est représenté en demi-coupe partielle, par sa bride de connexion 2, par sa partie arrière de fixation de la conduite, généralement dénommée voûte 3 de l'embout et par le capot cylindrique 10. La conduite est représentée par sa carcasse 4 et sa gaine de pression 5, ainsi que par l'extrémité retournée 6 de ses armures 7. La gaine 5 est sertie grâce à une pièce appelée couramment bride ou cône de sertissage 8 qui, lorsqu'elle est poussée par l'arrière lors du montage de l'embout par des organes non représentés, vient glisser contre une portée conique de la voûte 3 et mordre dans la gaine 5, soutenue à cet endroit par une canule effilée 9. Une gaine sacrificielle 21 de plus faible épaisseur que la gaine 5 et passant sous la canule peut être prévue entre la carcasse 4 et la gaine 5.Ces éléments sont connus en eux-mêmes et ne nécessitent pas de description plus détaillée. Du reste, l'invention ne dépend pas de la configuration précise de l'embout et de la conduite, mais elle peut être mise en oeuvre sur d'autres types d'embout et de conduite que ceux illustrés dans la figure unique. La description de l'embout n'est donnée qu'à titre indicatif d'un mode de réalisation possible sur lequel peut être mise en oeuvre l'invention.

Selon l'invention, la gaine 5 incorpore près de son extrémité avant au moins un aimant 11. Par ailleurs, dans la voûte 3 de l'embout, sont logés (par exemple) trois capteurs 12 C1, C2, C3, disposés à une distance E de la gaine et de manière à pouvoir détecter et observer le déplacement éventuel de celle-ci par la variation du champ magnétique devant les capteurs respectifs C1 à C3. La présence de trois capteurs permet de suivre l'évolution du déplacement de la gaine. Bien entendu, la disposition et le nombre des capteurs sont également définis en fonction des différents paramètres techniques et physiques de l'embout et de la conduite comme les caractéristiques des aimants positionnés dans la conduite ou la nature de l'acier formant la voûte de l'embout par exemple. Le ou les capteurs sont introduits dans la voûte 3 de l'embout par des perçages radiaux 13 de diamètre D qui débouche dans une gorge 14 disposée dans la paroi de l'espace 15 entourant la voûte de l'embout. Un perçage 16 relie la gorge 14 à l'extérieur, à l'avant de l'embout. De la sorte, des fils de connexion 17 des capteurs peuvent être ramenés depuis l'emplacement des capteurs 12 jusqu'à une boîte de connexion 18 qui peut être reliée par une liaison 19. filaire ou non, à une unité de traitement de signal 20.

Le ou les aimants 11 sont par exemple des aimants cylindriques de petites dimensions, de l'ordre de 5 mm de longueur et de 4 à 8 mm de diamètre, disposés radialement dans la gaine 5. Ils peuvent être revêtus d'un polymère de type polytétrafluorure d'éthylène ou polyfluorure de vinylidène contre la corrosion et pour l'isolation électrique carcasse/voûte. Les aimants 11 sont mis en place dans la gaine au moment du montage de l'embout. Si plusieurs aimants 11 sont utilisés, ils sont disposés dans un même plan transversal, perpendiculaire à l'axe XX' de l'embout 1 et de la conduite. Ils sont répartis circonférentiellement à intervalle régulier pour couvrir un secteur angulaire.

Les capteurs 12 de mesure du champ magnétique sont des capteurs standard de petites dimensions (diamètre inférieur à 3 ou 4 mm). Il existe de tels capteurs qui résistent sans précaution particulière à une température de 150 °C. Sinon, il faut les isoler thermiquement, par exemple dans de petits tubes en polytétrafluorure d'éthylène.

Selon un mode de réalisation d'un embout de l'invention, il peut être introduit dans un même perçage radial 13 deux capteurs destinés à mesurer les caractéristiques du champ magnétique créé par les aimants 11, un capteur étant destiné à la mesure de la composante radiale du champ tandis que l'autre capteur mesure la composante longitudinale de celui-ci. Cette double mesure permet de déterminer l'angle du champ magnétique créé au niveau desdits capteurs par les aimants 11. La mesure de cet angle permet d'améliorer la sensibilité du dispositif et de faciliter son étalonnage si l'on compare aux modes de réalisation où seule une unique composante du champ est mesurée par le ou les capteurs.

La distance E qui sépare les capteurs 12 des aimants 11 doit être la plus faible possible, sans toutefois affaiblir la tenue mécanique de la voûte 3 de l'embout : en pratique des perçages 13 de 4 à 5 mm de diamètre jusqu'à une profondeur laissant une distance E de 6 à 10 mm conviennent.

Afin de faciliter la mesure, la zone de l'embout située entre le ou les capteurs et la couche dont on veut mesurer le déplacement est avantageusement réalisé en matériau amagnétique, comme par exemple en alliage Nickel Chrome Molybdène du type alloy 625. Pour cela, la voûte de l'embout 3 présente par exemple un alésage avec un revêtement en matériau amagnétique et les perçages radiaux 13 où sont disposés le ou les capteurs débouchent au niveau dudit revêtement. Bien entendu, d'autres alternatives telles que des pièces en matériau amagnétique rapportées dans des perçages traversant peuvent également être proposées.

La pluralité de capteurs disposés à distance dans le sens longitudinal permet de faciliter et de fiabiliser le traitement des signaux, et de donner une information plus précise sur le glissement exact de la gaine 5, cela dans des gammes de glissement plus larges (par exemple de l'ordre de 20 à 50 mm en fonction de la géométrie de l'embout 1)

## Revendications

1. Embout de fixation pour une conduite tubulaire flexible comprenant au moins, de l'intérieur vers l'extérieur plusieurs couches coaxiales (4, 5, 7) et notamment une gaine de pression (5) réalisée en matière plastique et au moins une nappe d'armures de traction (7), l'embout (1) comportant une voûte annulaire (3) sur laquelle peut prendre appui une bride de sertissage (8) de la gaine de pression (5), **caractérisé en ce que** l'embout (1) comporte également au moins un capteur (12) intégré de déplacement d'une (4, 5) des couches de la conduite.

2. Embout selon la revendication 1, **caractérisé en ce que** la couche à surveiller est munie d'un marqueur spécifique (11) auquel est sensible le capteur de détection (12).

3. Embout selon la revendication 1, **caractérisé en ce que** le capteur (12) est un capteur du déplacement de la gaine de pression (5).

4. Embout selon la revendication 1, **caractérisé en ce que** le capteur (12) est un capteur du déplacement de la carcasse (4) d'une conduite de type à passage non-lisse.

5. Embout selon la revendication 1, **caractérisé en ce que** le capteur (12) est un capteur de champ magnétique coopérant avec au moins un aimant (11) disposé dans la gaine de pression (5).

6. Embout selon la revendication 3, **caractérisé en ce que** plusieurs aimants (11) sont disposés dans la gaine dans un plan transversal à l'axe longitudinal de la conduite.

7. Embout selon l'une quelconque des revendications 3 ou 4, **caractérisé en ce que** le capteur magnétique (12) est choisi parmi les capteurs à effet Hall, à magnétodiode, à magnétorésistance ou à fibres optiques.

8. Embout selon l'une quelconque des revendications 1 à 5, **caractérisé en ce qu'**il comprend plusieurs capteurs (12) décalés longitudinalement (C1, C2, C3).

9. Embout selon la revendication 8, **caractérisé en ce que** la disposition des capteurs (C1, C2, C3) dans l'embout est définie par la finesse de la mesure recherchée et par le déplacement potentiel à mesurer.

10. Embout selon l'une quelconque des revendications 1 à 6, **caractérisé en ce que** le capteur (12) est logé dans la voûte annulaire (3) de l'embout.

11. Embout selon la revendication 7, **caractérisé en ce que** le logement du capteur (12) est relié à l'extérieur de l'embout par des passages (14, 16) pour les connexions.

12. Embout selon l'une quelconque des revendications 7 ou 8, **caractérisé en ce que** le logement du capteur (12) comporte une protection thermique.

13. Conduite flexible comportant un embout muni d'au moins un capteur (12) selon l'une quelconque des revendications 1 à 12, **caractérisée en ce qu'**elle comporte dans une (4, 5) de ses couches constitutives dont on veut détecter le déplacement au moins un marqueur (11) associé au capteur (12).

14. Conduite flexible selon la revendication 13, **caractérisée en ce qu'**elle comporte dans une de ses couches des moyens de transmission (17) destinés à transmettre les informations fournies par le capteur (12) de l'embout.

## Patentansprüche

1. Befestigungsstück bzw. -ansatz bzw. -stutzen für eine rohrförmige Rohr bzw. Schlauchleitung, das mindestens, von innen nach außen, mehrere koaxiale Schichten (4, 5, 7) und insbesondere eine Druckumhüllung (5), die aus Kunststoff und mindestens einer Decke bzw. Hülle bzw. Schicht aus Zugarmierungen (7) ausgeführt ist, umfasst, wobei das Stück (1) eine ringförmige Wölbung (3) umfasst, die einer Befestigung bzw. einem Crimpflansch (8) der Druckumhüllung (5) als Auflage dienen kann, **dadurch gekennzeichnet, dass** das Stück (1) ebenfalls mindestens einen integrierten Sensor (12) für die Bewegung bzw. Versatz von einer (4, 5) der Schichten der Rohrleitung umfasst.

2. Stück nach Anspruch 1, **dadurch gekennzeichnet, dass** die zu überwachende Schicht mit einem spezifischen Markierer (11) versehen ist, auf den der Detektionssensor (12) anspricht.

3. Stück nach Anspruch 1, **dadurch gekennzeichnet, dass** der Sensor (12) ein Sensor für die Bewegung bzw. Versatz der Druckumhüllung (5) ist.

4. Stück nach Anspruch 1, **dadurch gekennzeichnet, dass** der Sensor (12) ein Sensor für die Bewegung bzw. Versatz der Karkasse (4) einer Rohrleitung des Typs mit nicht glattem Durchgang ist.

5. Stück nach Anspruch 1, **dadurch gekennzeichnet, dass** der Sensor (12) ein Magnetfeldsensor ist, der mit mindestens einem Magnet (11), der in der Druckumhüllung (5) angeordnet ist, zusammenwirkt.

6. Stück nach Anspruch 3, **dadurch gekennzeichnet, dass** mehrere Magnete (11) in der Umhüllung in einer Ebene transversal zur Längsachse der Rohrleitung angeordnet sind.

7. Stück nach einem der Ansprüche 3 oder 4, **dadurch gekennzeichnet, dass** der magnetische Sensor (12) unter Halleffekt-, Magnetdioden-, Magnetwiderstands- oder Glasfasersensoren gewählt wird.

8. Stück nach einem der Ansprüche 1 bis 5, **dadurch gekennzeichnet, dass** es mehrere Sensoren (12) umfasst, die in Längsrichtung versetzt bzw. in Abständen angeordnet sind (C1, C2, C3).

9. Stück nach Anspruch 8, **dadurch gekennzeichnet, dass** die Anordnung der Sensoren (C1, C2, C3) im Stück durch die angestrebte Feinheit der Messung und durch die zu messende potentielle Bewegung definiert ist.

10. Stück nach einem der Ansprüche 1 bis 6, **dadurch gekennzeichnet, dass** der Sensor (12) in der ringförmigen Wölbung (3) des Stücks untergebracht ist.

11. Stück nach Anspruch 7, **dadurch gekennzeichnet, dass** die Unterbringung des Sensors (12) durch Durchgänge (14, 16) für die Verbindungen mit dem Äußeren des Stücks verbunden ist.

12. Stück nach einem der Ansprüche 7 oder 8, **dadurch gekennzeichnet, dass** die Unterbringung des Sensors (12) einen thermischen Schutz bzw. Hitzeschutz umfasst.

13. Schlauch, der ein Stück umfasst, das mit mindestens einem Sensor (12) nach einem der Ansprüche 1 bis 12 versehen ist, **dadurch gekennzeichnet, dass** er in einer seiner ihn bildenden Schichten (4, 5), deren Bewegung ermittelt werden soll, mindestens einen mit dem Sensor (12) verbundenen Markierer (11) umfasst.

14. Schlauch nach Anspruch 13, **dadurch gekennzeichnet, dass** er in einer seiner Schichten Übertragungsmittel (17) umfasst, die darauf ausgerichtet sind, die durch den Sensor (12) des Stücks gelieferten Informationen zu übermitteln.

## Claims

1. End-fitting for a flexible tubular pipe comprising at least, from the inside outwards, several coaxial layers (4, 5, 7) and especially a pressure sheath (5), which is made of a plastic, and at least one tensile armour ply (7), the end-fitting (1) comprising an annular vault (3) on which a clamping flange (8) of the pressure sheath (5) can bear, **characterized in that** the end-fitting (1) also includes at least one integrated sensor (12) for detecting the displacement of one (4, 5) of the layers of the pipe.

2. End-fitting according to Claim 1, **characterized in that** the layer to be monitored is provided with a specific marker (11) to which the detection sensor (12) is sensitive.

3. End-fitting according to Claim 1, **characterized in that** the sensor (12) is a sensor for detecting the displacement of the pressure sheath (5).

4. End-fitting according to Claim 1, **characterized in that** the sensor (12) is a sensor for detecting the displacement of the carcass (4) of a smooth-bore pipe.

5. End-fitting according to Claim 1, **characterized in that** the sensor (12) is a magnetic field sensor that cooperates with at least one magnet (11) placed in the pressure sheath (5).

6. End-fitting according to Claim 3, **characterized in that** several magnets (11) are placed in the sheath in a plane transverse to the longitudinal axis of the pipe.

7. End-fitting according to either of Claims 3 and 4, **characterized in that** the magnetic sensor (12) is chosen from Hall-effect, magnetodiode, magnetoresistance or optical-fibre sensors.

8. End-fitting according to any one of Claims 1 to 5, **characterized in that** it comprises several longitudinally displaced sensors (12) (C1, C2, C3).

9. End-fitting according to Claim 8, **characterized in that** the arrangement of the sensors (C1, C2, C3) in the end-fitting is defined by the desired measurement fineness and by the potential displacement to be measured.

10. End-fitting according to any one of Claims 1 to 6, **characterized in that** the sensor (12) is housed in the annular vault (3) of the end-fitting.

11. End-fitting according to Claim 7, **characterized in that** the housing for the sensor (12) is connected to the outside of the end-fitting via passages (14, 16) for the connections.

12. End-fitting according to either of Claims 7 and 8, **characterized in that** the housing for the sensor (12) includes a thermal protection device.

13. Flexible pipe that includes an end-fitting provided with at least one sensor (12) according to any one of Claims 1 to 12, **characterized in that** it includes, in one (4, 5) of its constituent layers whose displacement it is desired to detect, at least one marker (11) associated with the sensor (12).

14. Flexible pipe according to Claim 13, **characterized in that** it includes, in one of its layers, transmission means (17) intended to transmit the information delivered by the sensor (12) of the end-fitting.
